# EUROPÄISCHE PATENTANMELDUNG

(11) **EP 0 717 292 A2**
(43) Veröffentlichungstag der Anmeldung: **19.06.1996**
(21) Anmeldenummer: 95119483.6
(22) Anmeldetag: 11.12.1995
(51) Int. Cl.: G01V 8/10

(54) **Passiv-Infrarot-Bewegungsmelder mit Sammellinsen zu einer Rundumerfassung von 360 Grad**

(30) Priorität: 17.12.1994 DE 4445197
(71) Anmelder: ABB PATENT GmbH, D-68309 Mannheim (DE)
(72) Erfinder: Hofmann, Günter, D-01169 Dresden (DE); Zimmerhackl, Manfred, D-01219 Dresden (DE); Norkus, Volkmar, D-01169 Dresden (DE); Lang, Jens-Olaf, D-01462 Cossebaude (DE); Rosch, Rainer, D-58513 Lüdenscheid (DE)
(74) Vertreter: Rupprecht, Klaus, Dipl.-Ing.

(57) **Zusammenfassung**

Bei einem zur Rundumerfassung von 360° geeigneten Passiv-Infrarot-Bewegungsmelder soll eine hohe Empfindlichkeit erreicht werden. Dies gelingt dadurch, daß bei einer großen Zahl einzelner Sammellinsen (5) jeder Sammellinse (5) ein eigener Spiegel oder ein bestimmtes Spiegelsegment (6) zugeordnet ist. Diese beiden optischen Elemente (5, 6) sind dabei so aufeinander und auf einen Infrarotsensor (2) ausgerichtet, daß sie eine bestimmte Zone des zu überwachenden Außenbereiches erfassen. Die Umlenkspiegel befinden sich in einem rundkuppelartigen Kopfteil (7) eines Gehäuses (1) oberhalb des Infrarotsensors (2). Die Sammellinsen (5) sind in ein sich an das Kopfteil (7) anschließendes zylinder- oder ampelartiges Fenster (3) integriert.

## Beschreibung

Die Erfindung betrifft einen Passiv-Infrarot-Bewegungsmelder nach dem Oberbegriff des Anspruchs 1.

Ein Passiv-Infrarot-Bewegungsmelder ist im wesentlichen eine Vorrichtung, die in Abhängigkeit von der detektierten Infrarotstrahlung eines wärmeemittierenden Objektes einen Schaltvorgang auslöst. Er dient dazu einen Raumbereich auf sich bewegende Objekte zu überwachen, und reagiert z. B. auf die Änderung der Infrarotstrahlung im zu überwachenden Erfassungsbereich. Ein Infrarot-Strahlungsobjekt ist z. B. ein Mensch, der in einen zu überwachenden Raum eindringt oder sich in diesem bewegt. Der Passiv-Infrarot-Bewegungsmelder arbeitet lediglich als Empfänger von Infrarotstrahlung, während Infrarot-Bewegungsmelder anderer Art auch einen aktiven Infrarotsender aufweisen.

Die Leistungsfähigkeit eines Passiv-Infrarot-Bewegungsmelders wird im wesentlichen durch die Größe seines Erfassungswinkels und seine Empfindlichkeit bestimmt. In der Regel wird ein möglichst großer azimutaler Erfassungswinkel angestrebt. Die Maximalforderung einer Rundumerfassung von 360° wird von Passiv-Infrarotmeldern nur in Ausnahmefällen erreicht, da hierzu relativ komplizierte Aufbauten erforderlich sind. Wesentlich ist es, Geräte dieser Art so aufzubauen, daß sowohl eine Bewegungserfassung im Fern- wie aus im Nahbereich ermöglicht wird. Die Empfindlichkeit des Gerätes bezüglich der aus unterschiedlichen Richtungen einfallenden Wärmestrahlung sollte möglichst gleichmäßig sein.

Aus der DE 41 37 560 C1 ist bereits ein Passiv-Infrarot-Bewegungsmelder mit einem azimutalen Erfassungswinkel von 360° bekannt, der einen rotationssymmetrischen Spiegelkörper aufweist, mit dessen Hilfe die rundum durch ein Gehäusefenster einfallenden Wärmestrahlen so abgelenkt werden, daß sie auf die Sensorfläche eines Infrarotsensors fallen. Hierzu wird eine mit einer Vielzahl von einzelnen, vorzugsweise als Fresnellinsen ausgebildeten Sammellinsen, versehene streifenförmige erste Kunststoffolie so bemessen und in das Gehäusefenster eingesetzt, daß sie sich der zylindrischen oder konischen Form des Gehäusemantels anpaßt. Bei diesem Aufbau dient die verspiegelte Mantelfläche eines mit seiner Spitze auf den Infrarotsensor weisenden Kegels zur Umlenkung der seitlich über Sammellinsen einfallenden Wärmestrahlung. Von der Form der verspiegelten Mantelfläche hängt es ab, in welchem Umfang es gelingt, aus einem größeren Bereich einfallende Wärmestrahlen genau auf den Infrarotsensor umzulenken. Es hat sich gezeigt, daß eine solche einheitliche, in sich geschlossene Spiegelfläche nur bedingt in der Lage ist, einen größeren Erfassungsbereich abzudecken. Vielmehr muß damit gerechnet werden, daß ein größerer Teil der einfallenden Wärmestrahlung den Infrarotsensor nicht erreicht. Dies kann zumindest in Teilbereichen zu einem unerwünschten Absinken der Empfindlichkeit führen.

Aufgabe der Erfindung ist es, einen Passiv-Infrarot-Bewegungsmelder nach dem Oberbegriff des Anspruchs 1 zu schaffen, mit dem ein großer Erfassungsbereich, vom Nah- bis zum Fernbereich abgedeckt werden kann und eine möglichst hohe Empfindlichkeit erzielt wird.

Diese Aufgabe wird durch die im Anspruch 1 gekennzeichneten Merkmale gelöst. Zweckmäßige Ausgestaltung und Weiterbildungen des Erfindungsgegenstandes sind in den Unteransprüchen genannt.

Eine relativ gleichmäßig über den gesamten Erfassungsbereich verteilte hohe Empfindlichkeit des Passiv-Infrarot-Bewegungsmelders wird dadurch erzielt, daß jeder der im Fenster integrierten Sammellinsen ein eigener Spiegel bzw. ein eigenes Spiegelsegment zugeordnet ist. Dadurch wird es möglich, diese beiden optischen Elemente so aufeinander auszurichten, daß die von ihnen erfaßte Wärmestrahlung, die aus einer bestimmten Zone des zu überwachenden Außenbereiches kommt, ganz gezielt den Infrarotsensor erreicht. Ein kuppelartiges Kopfteil des Gehäuses ermöglicht es, die den verschiedenen Sammellinsen zugeordneten Umlenkspiegel so anzuordnen, daß sie den Strahlenverlauf der benachbarten optischen Elemente nicht beeinträchtigen.

Bei der üblicherweise geforderten azimutalen Rundumerfassung von 360° ist es zur Schaffung eines breiten Erfassungsbereiches zweckmäßig, wenn sich das zylinder- oder ampelartige Fenster primär in vertikaler Richtung erstreckt und damit die Voraussetzung dafür bietet, daß im Fenster Sammellinsen in mehreren Horizontalebenen positioniert werden können. Besonders zweckmäßig ist eine ringförmige Anordnung, der auf den Umfang des Fensters verteilten Sammellinsen und eine entsprechende Anordnung der Spiegel oder Spiegelsegmente, die dann ebenfalls ringförmig im kuppelartigen Kopfteil angeordnet sind. Bei einer Ausbildung des Fensters, die von einer zylindrischen in eine trichterförmige, sich dem Infrarotsensor zuneigende Ampelform übergeht, gelingt es, besonders auch den Nahbereich zu berücksichtigen und damit einen Unterkriechschutz zu erreichen.

Entscheidend für den guten Wirkungsgrad des Passiv-Infrarot-Bewegungsmelders ist eine exakte Ausrichtung der einzelnen optischen Elemente aufeinander. Um Justagearbeiten jedoch zu minimieren, ist es zweckmäßig, die im rundkuppelartigen Kopfteil angeordneten Unlenkspiegel in einem gemeinsamen, alle Umlenkspiegel zusammenfassenden Teil zu vereinigen. Dieses Teil kann als Kunststoffspritzgußteil komplett hergestellt werden. Auch das zylinder- oder ampelartige Fenster mit den in ihm integrierten Sammellinsen wird vorteilhafterweise als komplettes Teil erstellt, wobei es sich hierbei wiederum um ein Kunststoffspritzgußteil handeln kann, aber auch eine folienartig ausgebildete Fresnellinse in einen entsprechenden Fensterrahmen eingesetzt werden kann.

Zur genauen Justierung ist es erforderlich, daß am Kopfteil und am Fenster Mittel vorgesehen sind, die ein optisch korrektes Ausrichten der Sammellinsen auf die Umlenkspiegel ermöglichen. Ebenso müssen Mittel vorgesehen sein, die eine Ausrichtung des Infrarotsensors auf die übrigen optischen Elemente gewährleisten. Der Infrarotsensor wird dabei vorteilhaft im Zentrum einer sich im unteren Ende des zylinder- oder ampelartigen Fensters anschließenden Bodenplatte positioniert.

Bei einem großen Erfassungsbereich ist davon auszugehen, daß aus großer Entfernung einfallende Wärmestrahlung, dasselbe Strahlungsobjekt vorausgesetzt, mit relativ geringerer Strahlungsstärke am Infrarotsensor ankommt, als Strahlung aus dem Nahbereich. Es ist deshalb vorteilhaft zur Erzielung eines Empfindlichkeitsausgleichs im Strahlenweg mindestens einzelner Wärmestrahlen, insbesondere der aus dem Nahbereich kommenden Wärmestrahlen, einen die Strahlungsstärke dämpfenden Filter anzuordnen.

Man kann darüberhinaus die in bestimmte Strahlenwege eingefügten Filter so dimensionieren, daß sie in definierter Weise die aus den verschiedenen erfassten Zonen auftreffende Strahlungsstärke beeinflussen. In der Regel wird man eine etwa gleichgroße Strahlungsstärke anstreben, um auch im Fernbereich mit etwa gleicher Empfindlichkeit detektieren zu können.

Ausführungsbeispiele der Erfindung sind in den Zeichnungen dargestellt und werden im folgenden näher beschrieben. Es zeigen:
- Fig. 1: einen zur Deckenbefestigung geeigneten Passiv-Infrarot-Bewegungsmelder mit zylindrischem Fenster seitlich im Schnitt,
- Fig. 2: eine Draufsicht auf die Innenseite des kuppelartigen Kopfteils mit den Umlenkspiegeln nach Fig. 1,
- Fig. 3: eine Variante der Darstellung nach Fig. 1 mit einem ampelartigen Fenster.

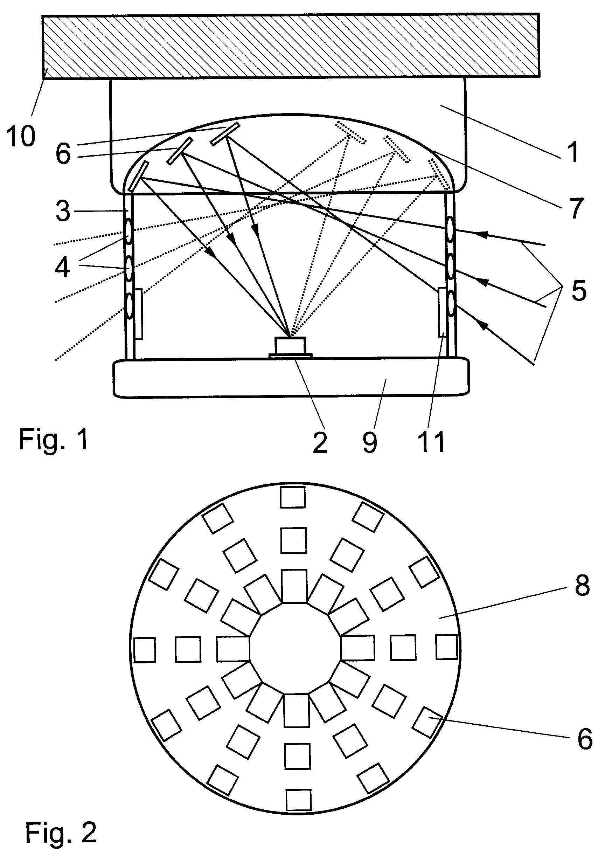

Wie Fig. 1 erkennen läßt, ist ein Passiv-Infrarot-Bewegungsmelder mit seinem Gehäuse 1 an einer Decke 10 befestigt. Im Gehäuse 1 mit seiner Bodenplatte 9 befindet sich ein zylindrisches Fenster 3, in das Sammellinsen 4 integriert sind. Die Sammellinsen 4 sind ringförmig in drei Horizontalebenen übereinander in dem Fenster 3 angeordnet. Wie die schematische Darstellung verdeutlicht, gelingt es durch diesen Aufbau, daß Wärmestrahlen 5 aus verschiedenen Zonen des Außenbereichs über die Sammellinsen 4 in das Innere des Gehäuses 1 gelangen. Sie treffen dabei auf Umlenkspiegel 6, die für eine gezielte Reflektion der Wärmestrahlen 5 auf einen Infrarotsensor 2 sorgen. Ein rundkuppelartiges Kopfteil 7 innerhalb des Gehäuses 1 bietet den notwendigen Raum, um jeden einzelnen der Umlenkspiegel 6 so zu positionieren, daß sich eine genaue Zuordnung eines bestimmten Spiegels zu einer bestimmten Sammellinse in einer Weise ergibt, wodurch die aus einem bestimmten Raumbereich kommenden Wärmestrahlen 5 auf den Infrarotsensor 2 umgelenkt werden. Der Infrarotsensor 2 ist dabei unterhalb des Kopfteils 7 im Zentrum der Bodenplatte 9 positioniert.

Fig. 2 zeigt den zu einem Teil zusammengefaßten Spiegel 8 mit den auf verschiedenen konzentrischen Ringen liegenden Einzelspiegeln oder Spiegelsegmenten 6. Letztere können plane oder auch konkave Spiegelflächen besitzen.

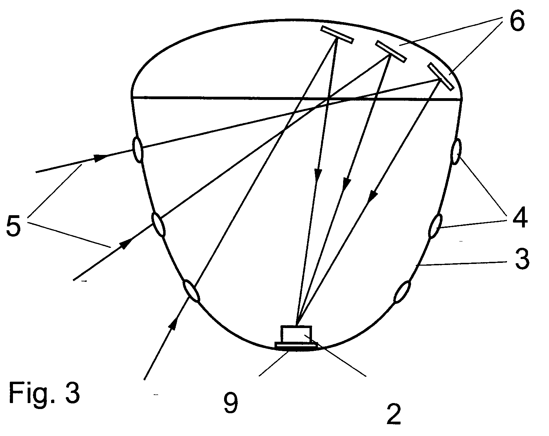

Die in Fig. 3 dargestellte Variante der Fig. 1 besitzt eine von der zylindrischen Form abweichende Ampelform des Fensters 3, durch die es möglich ist, auch den Nahbereich, der anderenfalls durch die Bodenplatte 9 abgedeckt ist, mit zu erfassen. Die Bodenplatte 9 beschränkt sich hier im wesentlichen auf den Montagebereich des Infrarotsensors 2. Das somit vergrößerte gebogene Fenster 3 ermöglicht somit eine vergrößerte Rumdumerfassung.

## Patentansprüche

1. Passiv-Infrarot-Bewegungsmelder mit einem innerhalb eines Gehäuses (1) angeordneten Infrarotsensor (2) und mindestens einem im Gehäusemantel vorgesehenen Fenster (3) mit in ihm ausgebildeten Sammellinsen (4) zu einer Rundumerfassung von etwa 360°, bei der die Sammellinsen (4) von außen kommende Wärmestrahlen (5) auf Umlenkspiegel (6) fokussieren, über die sie zu dem Infrarotsensor (2) gelangen, der bei Strahlungsänderungen ein elektrisches Signal erzeugt, dadurch gekennzeichnet, daß die Umlenkspiegel (6) in einem rundkuppelartigen Kopfteil (7) des Gehäuses (1) über den Infrarotsensor (2) positioniert sind und die Sammellinsen (5) sich in einem an das Kopfteil (7) anschließenden Zylinder- oder ampelartigen Fenster (3) befinden und daß jeder Sammellinse (5) ein eigener Spiegel oder ein bestimmtes Spiegelsegment (6) zugeordnet ist und diese beiden optischen Elemente (5, 6) so aufeinander und auf den Infrarotsensor (2) ausgerichtet sind, daß sie eine bestimmte Zone des zu überwachenden Außenbezirkes erfassen.

2. Passiv-Infrarot-Bewegungsmelder nach Anspruch 1, dadurch gekennzeichnet, daß sich bei einer horizontalen Rundumerfassung von 360° das zylinder- oder ampelartige Fenster (3) primär in vertikaler Richtung erstreckt und im Fenster (3) Sammellinsen (4) in mehr als einer Horizontalebene positioniert sind.

3. Passiv-Infrarot-Bewegungsmelder nach Anspruch 2, dadurch gekennzeichnet, daß die Sammellinsen (4) ringförmig in mehreren Horizontalebenen innerhalb des Fensters (3) angeordnet sind und die zugehörigen Spiegel oder Spiegelsegmente (6) ebenfalls ringförmig im rundkuppelartigen Kopfteil (7) angeordnet sind.

4. Passiv-Infrarot-Bewegungsmelder nach einem der vorhergehenden Ansprüche, dadurch gekennzeichnet, daß die im rundkuppelartigen Kopfteil (7) angeordneten Umlenkspiegel (6) in einem gemeinsamen, alle Umlenkspiegel zusammenfassenden Teil, vorzugsweise einem Kunststoff-Spritzgußteil, vereinigt sind.

5. Passiv-Infrarot-Bewegungsmelder nach einem der vorhergehenden Ansprüche, dadurch gekennzeichnet, daß die im zylinder- oder ampelartigen Fenster angeordneten Sammellinsen in einem gemeinsamen, alle Sammellinsen zusammenfassenden Fenster (3), vorzugsweise einem Kunststoff-Spritzgußteil, vereinigt sind.

6. Passiv-Infrarot-Bewegungsmelder nach einem der vorhergehenden Ansprüche, dadurch gekennzeichnet, daß am Kopfteil (7) und am Fenster (3) Mittel vorgesehen sind, die ein optisch korrektes Ausrichten der Sammellinsen (4) auf die Umlenkplatte (6) ermöglichen.

7. Passiv-Infrarot-Bewegungsmelder nach einem der vorhergehenden Ansprüche, dadurch gekennzeichnet, daß der Infrarotsender (2) im Zentrum einer sich am unteren Ende des zylinder- oder ampelartigen Fensters (3) anschließenden Bodenplatte (9) positioniert ist.

8. Pasiv-Infrarot-Bewegungsmelder nach Anspruch 7, dadurch gekennzeichnet, daß an der Bodenplatte (9) und am Fenster (3) und/oder der Bodenplatte (9) und am Infrarotsensor (2) Mittel vorgesehen sind, die ein optisch korrektes Ausrichten auf die Umlenkspiegel (6) ermöglichen.

9. Passiv-Infrarot-Bewegungsmelder nach einem der vorhergehenden Ansprüche, dadurch gekennzeichnet, daß im Strahlenweg mindestens einzelner Wärmestrahlen (5), insbesondere der aus dem Nahbereich kommenden Wärmestrahlen, ein die Strahlungsstärke dämpfender Filter (11) liegt.

10. Passiv-Infrarot-Bewegungsmelder nach Anspruch 9, daß die in bestimmte Strahlenwege eingefügten Filter (11) so dimensioniert sind, daß sie eine den Anforderungen entsprechend definierte, vorzugsweise gleiche, auf den Infrarotsensor (2) aus den verschiedenen erfaßten Zonen auftreffende Strahlungsstärke bewirken.
